# EUROPEAN PATENT SPECIFICATION

(11) **EP 2 807 379 B1**
(45) Date of publication and mention of the grant of the patent: **15.09.2021**
(21) Application number: 13701100.3
(22) Date of filing: 24.01.2013
(51) Int. Cl.: F04D 27/02

(54) **COMPRESSOR SYSTEM FOR NATURAL GAS, METHOD OF COMPRESSING NATURAL GAS AND PLANT USING THEM**
VERDICHTUNGSSYSTEM FÜR ERDGAS, VERFAHREN ZUM VERDICHTEN VON ERDGAS UND ANLAGE DAMIT
SYSTÈME DE COMPRESSEUR POUR GAZ NATUREL, PROCÉDÉ DE COMPRESSION DE GAZ NATUREL ET INSTALLATION Y FAISANT APPEL

(30) Priority: 27.01.2012 IT CO20120002
(43) Date of publication of application: 03.12.2014
(73) Proprietor: Nuovo Pignone S.r.l., 50127 Florence (IT)
(72) Inventor: TACCONELLI, Remo, I-50127 Florence (IT); CHANDRASEKARAN, Shankar, Chennai Tamil Nadu 600032 (IN); REDDY, Murali Krishna, Gurgaon Haryana 122002 (IN); AH KARM, Tivon Sing Lezin, F-75007 Paris (FR); VADAPALLI, Sandilya, Gurgaon Haryana 122009 (IN); GUENARD, Denis Guillaume, F-71203 Le Creusot (FR)
(74) Representative: BRP Renaud & Partner mbB Rechtsanwälte Patentanwälte Steuerberater
(86) International application number: PCT/EP2013/051384
(87) International publication number: WO 2013/110733

(56) References cited:
- EP-A1- 2 083 172
- DE-A1-102010 020 145
- GB-A- 1 000 877
- US-A- 3 802 795
- US-A1- 2007 134 111
- Massimo Camatti ET AL: "Instability of a high pressure compressor equipped with honeycomb seals", GE Oil & Gas, 31 December 2003 (2003-12-31), pages 39-48, XP055216267, Retrieved from the Internet: URL:http://turbolab.tamu.edu/proc/turbopro c/T32/t32-06.pdf [retrieved on 2015-09-25]

## Description

### TECHNICAL FIELD

Embodiments of the subject matter disclosed herein generally relate to a compressor system for natural gas, a method of compressing natural gas and a plant using such a compressor and/or method.

### BACKGROUND ART

US 3 802 795 discloses an assembly including a compressor and a housing that could be provided with a screen opening or an opening within a hood to draw ambient air.

DE 10 2010 020 145 A1 relates to air separation plants in which several thousand tonnes of oxygen is produced per day.

Massimo Camatti ET AL: "Instability of a high pressure compressor equipped with honeycomb seals", GE Oil & Gas, 31 December 2003 (2003-12-31), pages 39 - 48, XP55216267 discloses a gas turbine connected to two compressors via a parallel axes gearbox.

In the field of "Oil & Gas", it is common to compress natural gas.

This happens, for example, in upstream plants wherein the gas comes typically from an oil well or a gas well, and is a mixture that contains typically hydrocarbons in variable proportion and/or hydrogen in variable proportion and/or carbon dioxide in variable proportion; when the gas comes from an oil well, the gas need to be separated from oil before being compressed.

This happens, for example, in downstream plants wherein the gas comes typically from a pipeline or from another plant (so called "process gas").

In the field of "Oil & Gas", three major industrial process stages (with corresponding plants) are identified: "upstream", "midstream" and "downstream"; "midstream" is commonly included in "downstream".

It is worth noting that in the field of "Oil & Gas", treating, particularly compressing, gas is problematic; in fact, for example, gas may be potentially explosive especially if it contains hydrogen and/or ammonia.

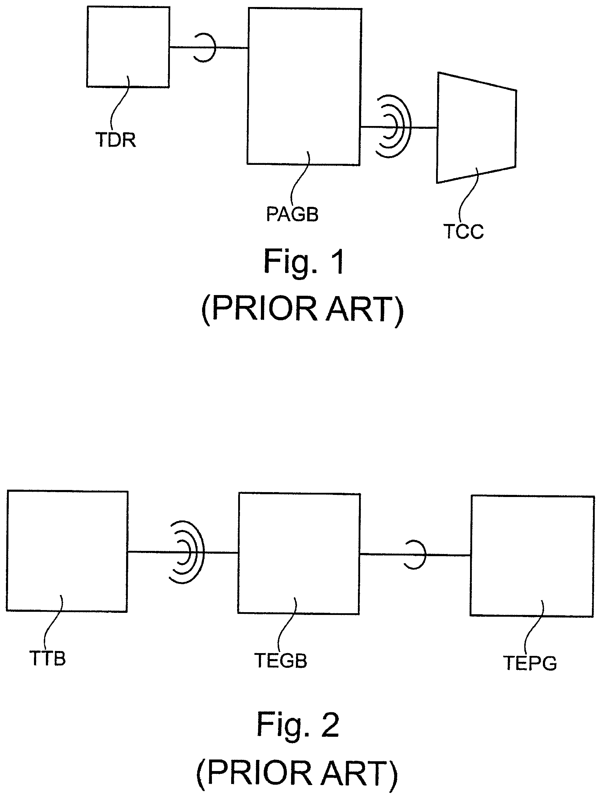

The solution to the problem of compression used till now and for a very long time (i.e. many decades) provides for the use of a driver machine, a parallel-axes gearbox, and a compressor (often a centrifugal compressor) for compressing the natural gas, all of them in train configuration connection. In Fig. 1, there is shown a general block diagram of this known solution: a traditional centrifugal compressor TCC is connected to the output of a traditional parallel-axes gearbox PAGB that is connected to the output of a traditional driver machine TDR; gearbox PAGB increases the rotation speed from input to output and this is schematically represented by the different number of arcs at its input and at its output.

Although many specific solutions have been conceived in order to get ever improving performances, the above mentioned approach has been maintained; Fig. 1 highlights that the axes of the input shaft and the output shaft of the gearbox are parallel and at a distance from each other.

### SUMMARY

The present invention is defined in the accompanying claims.

With the aim of achieving further and substantial improvements it has been decided to modify the approach, specifically to modify the train.

Instead of using a parallel-axes gearbox, an epicyclic gearbox was chosen.

Epicyclic gearboxes are known since many years and have already been used in the field of "Oil & Gas"; anyway, in this field, they have been used as devices for reducing rotation speed when driving electric power generators. In Fig. 2, there is shown a general block diagram of this known solution: a traditional electric power generator TEPG is connected to the output of a traditional epicyclic gearbox TEGB that is connected to the output of a traditional turbine TTB; gearbox TEGB decreases the rotation speed from input to output and this is schematically represented by the different number of arcs at its input and at its output; Fig. 2 highlights that the axes of the input shaft and the output shaft of the gearbox are coincident.

Although many specific solutions have been conceived in order to get ever improving performances, the above mentioned approach has been maintained till now.

In the field of "Oil & Gas", reliability of the plants provided and installed to the client is of the utmost importance. Therefore, the components, including the machines, of these plants are chosen based on their reliability and long track record.

A first aspect of the present invention is a compressor system for natural gas according to claim 1.

The epicyclic gearbox used in the inventive compressor system may comprise at least two (preferably at least three) intermediate shafts transmitting rotation from said input rotary member to said output rotary member, and integrating or mounting one toothed member or two toothed members of different diameters.

The axes of said at least two intermediate shafts may be arranged to rotate around the axis of the input rotary member of the epicyclic gearbox.

Said driver machine may be an electric motor.

Said driver machine may be a gas turbine.

Said driver machine may be a steam turbine.

Said epicyclic gearbox may be mounted on the driver machine.

Said epicyclic gearbox may be mounted on foot.

Said epicyclic gearbox may be mounted both on the driver machine and on foot.

The compressor system may comprise further a single baseplate; in this case, said driver machine and said centrifugal compressor are mounted on said single baseplate. Said centrifugal compressor may have a rated power in the range from 2 MW to 40 MW.

Said driver machine may comprise two output rotary members; in this case, the compressor system comprises an epicyclic gearbox and a centrifugal compressor for each of said two output rotary members.

The compressor system comprises at least one centrifugal compressor in addition to the one already considered; different arrangements are possible.

According to the invention, said centrifugal compressor comprises an output rotary member, and the compressor system comprises further:
- another gearbox comprising an input rotary member and an output rotary member, and
- another centrifugal compressor for compressing natural gas comprising an input rotary member;
the output rotary member of said centrifugal compressor is coupled to the input rotary member of said another gearbox, and the output rotary member of said another gearbox is coupled to the input rotary member of said another centrifugal compressor.

The compressor system may comprise further a variable-speed drive system coupled to said driver machine and arranged to vary the rotation speed of said centrifugal compressor.

A second aspect of the present invention is a method of compressing natural gas according to claim 5.

Some advantageous features and variants are set out in the following.

The gear ratio of said gearbox may be in the range from 5 to 20.

Said centrifugal compressor may be operated at a maximum rotation speed in the range from 14000 rpm to 28000 rpm.

Said centrifugal compressor may be operated at a pressure ratio in the range from 1.5 to 40.

Said centrifugal compressor may be operated so to provide an maximum output gas pressure in the range from 30 bar to 600 bar.

Said centrifugal compressor may be operated so to treat a maximum gas flow in the range from 1500 m3/hr to 100000 m3/hr.

Considering the output rotary member of said driver machine, said output rotary member is used for driving two or more centrifugal compressors at different rotation speeds.

Said driver machine may be operated at variable rotation speed.

A third aspect of the present invention is a plant according to claim 8.

The plant comprises a compressor system for gas according to claim 1.

The plant may be of the upstream type, in particular of the offshore upstream type. The plant may be of the downstream type.

### BRIEF DESCRIPTION OF DRAWINGS

The accompanying drawings show illustrative examples not forming part of the claimed subject matter and embodiments of the invention. In the drawings:
Fig. 1 shows schematically a prior art solution for compressing natural gas using a parallel-axes gearbox,
Fig. 2 shows schematically a prior art solution for generating electric power using an epicyclic gearbox,
Fig. 3 shows schematically the principle of the compressor systems disclosed herein,
Figures 4 to 10 show illustrative examples of compressor systems not forming part of the claimed subject matter of the invention.
Fig. 11 shows schematically a first embodiment of a compressor system,
Fig. 12 shows schematically a second embodiment of a compressor system,
Fig. 13 shows a graph corresponding to a reasonable limit for using parallel-axes gearboxes in combination with gas turbines,
Fig. 14 shows two graphs corresponding to a reasonable limit for using respectively parallel-axes gearboxes and epicyclic gearboxes in combination with electric motors, Fig. 15 shows a conceptual flowchart of a method for compressing natural gas, and
Fig. 16 shows schematically an offshore platform.

### DETAILED DESCRIPTION

The following description refers to the accompanying drawings. The same reference numbers in different drawings identify the same or similar elements. The following detailed description does not limit the invention. Instead, the scope of the invention is defined by the appended claims.

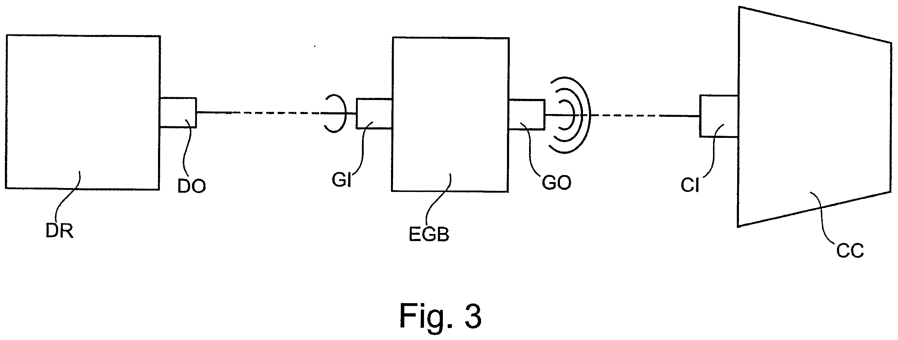

Fig. 3 shows schematically the principle of a generally known compressor system.

This compressor system comprises:
- a driver machine DR,
- an epicyclic gearbox EGB, and
- a centrifugal compressor CC for compressing natural gas.

Driver machine DR comprises a output rotary member DO; the epicyclic gearbox EGB comprises an input rotary member GI and an output rotary member GO; the centrifugal compressor CC comprises an input rotary member CI.

It is to be noted that all rotary members in Fig. 3 are shown as shafts protruding from the boxes of the respective machines only for an easier understanding.

The output rotary member DO of the driver machine DR is coupled to the input rotary member GI of the epicyclic gearbox EGB; the output rotary member GO of the epicyclic gearbox EGB is coupled to the input rotary member CI of the centrifugal compressor CC.

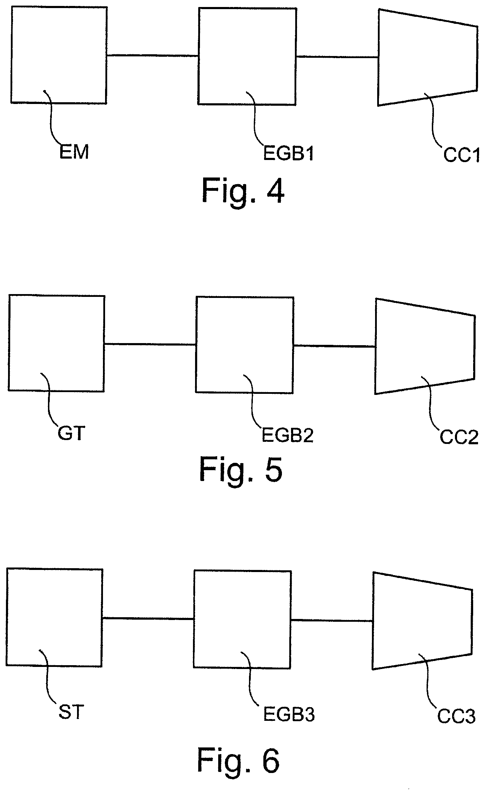

It is to be noted that these couplings are shown in Fig. 3 as dashed lines in order to shown that other devices and/or machines might be connected between the driver machine DR and the epicyclic gearbox EGB and between the epicyclic gearbox EGB and the centrifugal compressor CC; anyway, according to some illustrative examples of the compressor system not forming part of the claimed subject matter, as shown for example in Fig. 4 and Fig. 5 and Fig. 6, no machines are connected in-between.

The gear ratio of the epicyclic gearbox EGB is greater than one (typically much greater than one) thus increasing the rotation speed from input to output; this is schematically represented by the different number of arcs at its input, i.e. the member GI, and at its output, i.e. the member GO; specifically, next to the input rotary member GI there is one arc, meaning low rotation speed, and next to the output rotary member GO there are three arcs, meaning high rotation speed.

It is worth clarifying that, in an epicyclic gearing, two or more outer gears (typically three or more outer gears), called "planet gears", mesh with a central gear, called "sun gear". The "planet gears" may be fixed or arranged to revolve around the "sun gear". When the "planet gears" are arranged to revolve around the "sun gear", an outer ring gear, called "annulus", surrounds and meshes with the "planet gears".

The use of an epicyclic gearbox instead of a parallel-axes gearbox allows to save substantial (lateral) space, particularly in terms of footprint of the compressor system; this is due to the fact to the input and output axes being inline instead of parallel and laterally spaced.

The use of an epicyclic gearbox instead of a parallel-axes gearbox allows to use a simpler gearbox lubrication system as the lubrication requirements of an epicyclic gearbox are lower than the lubrication requirements of a parallel-axes gearbox.

It is to be noted that the principle described above may be embodied in many different ways. The configuration and design of the specific embodiments are influenced by many factors including, for example, the composition and/or the pressure of the natural gas coming from the gas well or oil well.

The centrifugal compressors to be considered for the present patent application in the field of "Oil & Gas", such as those labeled CC, CC1, CC2, CC3, CCA, CCB, CCC in the figures, have typically a rated power in the range from 2 MW to 40 MW.

For the present invention it is important that, during operation, the centrifugal compressor rotates at high rotation speed; this is achieved by an epicyclic gearbox with a (relatively) high gear ratio.

According to preferred embodiments, the gear ratio of the epicyclic gearbox is in the range from 5 to 20. In order to achieve such high gear ratios, multi-stage epicyclic gearing may be used. Two-stage epicyclic gearing may be a good compromise in terms of radial size, axial size, weight and gear ratio of the gearbox.

According to preferred embodiments, the epicyclic gearbox comprises at least two intermediate shafts transmitting rotation from the input rotary member to the output rotary member of the gearbox; each of these intermediate shafts may integrate or mount two toothed members of different diameters located at opposite sides of the intermediate shaft so that gear ratio is increased in a limited space; these intermediate shafts may be arranged to rotate around the axis of the input rotary member of the epicyclic gearbox; advantageously, three or five intermediate shafts, symmetrically located around the input rotary member, are used. The solution of gearbox just described may be considered a specific type of two-stage epicyclic gearbox, the two stages being integrated in a single arrangement, and is called "compound gearing".

In the illustrative examples of the compressor system not forming part of the claimed subject matter of Fig. 4, an electric motor EM is used as a driver machine; using electric motor for compressing natural gas is typical of upstream applications particularly for offshore platforms. The compressor system of Fig. 4 comprises the electric motor EM, an epicyclic gearbox EGB1 and a centrifugal compressor CC1 connected in train configuration.

In the illustrative example of the compressor system not forming part of the claimed subject matter of Fig. 5, a gas turbine GT is used as a driver machine. The compressor system of Fig. 5 comprises the gas turbine GT, an epicyclic gearbox EGB2 and a centrifugal compressor CC2 connected in train configuration.

In the illustrative example of the compressor system not forming part of the claimed subject matter of Fig. 6, a steam turbine ST is used as a driver machine. The compressor system of Fig. 6 comprises the steam turbine ST, an epicyclic gearbox EGB3 and a centrifugal compressor CC3 connected in train configuration.

The choice of the driver machine is influenced by many factors.

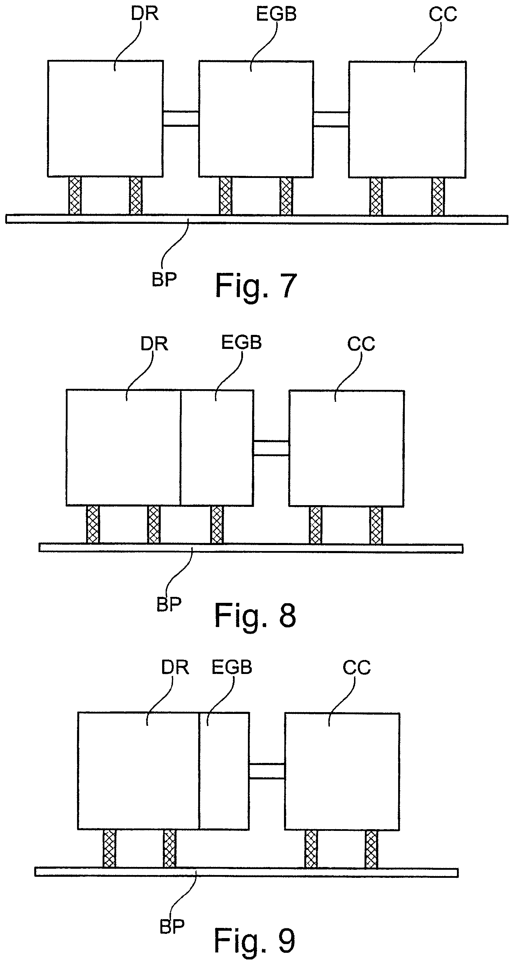

Fig. 7 and Fig. 8 and Fig. 9 emphasizes the construction of the compressor system even if in a very schematic way. These figures do not specify the kind of driver machine used, and they show simply a driver machine DR, an epicyclic gearbox EGB and a centrifugal compressor CC connected in train configuration.

All the illustrative examples of compressor systems not forming part of the claimed subject matter of Fig. 7 and Fig. 8 and Fig. 9 comprise a single baseplate BP and provide that the driver machine DR and the centrifugal compressor CC are mounted on the baseplate BP.

In Fig. 7, the epicyclic gearbox EGB is mounted only on the baseplate BP.

In Fig. 9, the epicyclic gearbox EGB is mounted only on the driver machine DR.

In Fig. 8, the epicyclic gearbox EGB is mounted partially on the baseplate BP and partially on the driver machine DR.

It appears from Fig. 7 and Fig. 8 and Fig. 9, that, mounting of the epicyclic gearbox on the centrifugal compressor is not the preferred choice. In fact, the choice and design of the centrifugal compressor are already difficult and depend on the specific application and application conditions of the compressor system; therefore, it is preferable to avoid complicating further the choice and design of the centrifugal compressor by considering also the need of mounting a gearbox on it.

As it is schematically highlighted in Fig. 7 and Fig. 8 and Fig. 9, mounting directly the epicyclic gearbox on the driver machine (typically on an electric motor) leads to a very compact arrangement, i.e. with a small footprint. A double mounting (see Fig. 8) may be a compromise between size of the footprint and mechanical complication of the design of the flanges of the driver machine and the gearbox.

The choice of the mounting of the epicyclic gearbox is influenced by many factors. Mounting of the gearbox directly on the driver machine allows to save substantial (longitudinal) space, particularly in terms of footprint of the compressor system.

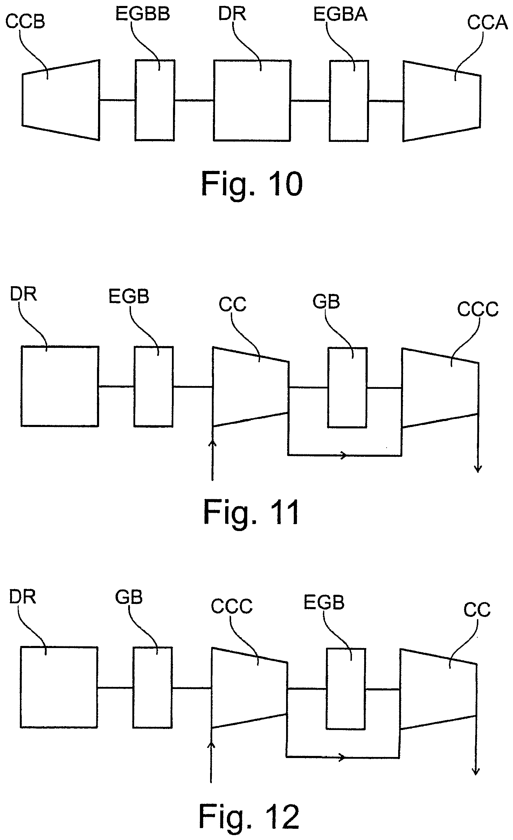

Other compressor systems comprise a number of machines higher than three connected in train configuration as shown for example in Fig. 10, Fig. 11, Fig. 12.

In Fig. 10, there is shown an illustrative example of a compressor system not forming part of the claimed subject matter wherein the driver machine DR comprises two output rotary members, in particular on opposite sides, and there is an epicyclic gearbox (EGBA and EGBB) and a centrifugal compressor (CCA and CCB) for each of the two output rotary members; this may be considered a double-train configuration. In Fig. 11, the compressor system comprises, in addition to the centrifugal compressor CC, another centrifugal compressor CCC; in this case, the compressor CC has an output rotary member (not shown in the figure). Another gearbox GB is advantageously provided so that the two compressors CC and CCC may rotate at different rotation speeds.

The mechanical connection is a single-train configuration; the rotary members of the machines are not shown in the figure. The output rotary member of the driver machine DR is connected to the input rotary member of the epicyclic gearbox EGB, the output rotary member of the epicyclic gearbox EGB is connected to the input rotary member of the compressor CC, the output rotary member of the compressor CC is connected to the input rotary member of the gearbox GB; the output rotary member of the gearbox GB is connected to the input rotary member of the compressor CCC. Comparing Fig. 11 with Fig. 1, one can realize that other machines are mechanically connected downstream to compressor CC, and as part of the same train.

The fluid connection in the first embodiment of the invention of Fig. 11 provides that the gas compressed by compressor CC is further compressed by compressor CCC; therefore, in general there is no need that the rotation speed of compressor CCC is much higher than the rotation speed of compressor CC; therefore, gearbox GB does not need to be an epicyclic gearbox (having a high gear ratio), although it might be.

Also in Fig. 12, the second embodiment of the invention, the compressor system comprises, in addition to the centrifugal compressor CC, another centrifugal compressor CCC. Another gearbox GB might also be provided.

The mechanical connection is a single-train configuration; the rotary members of the machines are not shown in the figure. The output rotary member of the driver machine DR is connected to the input rotary member of the gearbox GB, the output rotary member of the gearbox GB is connected to the input rotary member of the compressor CCC, the output rotary member of the compressor CCC is connected to the input rotary member of the epicyclic gearbox EGB; the output rotary member of the epicyclic gearbox EGB is connected to the input rotary member of the compressor CC. Comparing Fig. 12 with Fig. 1, one can realize that other machines are mechanically connected between the epicyclic gearbox EGB and the driver machine DR, and as part of the same train.

The fluid connection in the embodiment of Fig. 12 provides that the gas compressed by compressor CCC is further compressed by compressor CC. The rotation speed of compressor CC is much higher than the rotation speed of compressor CCC due to the presence of the epicyclic gearbox EGB; therefore, gearbox GB does not need to be an epicyclic gearbox (having a high gear ratio), although it might be.

Especially if an electric motor is used as a driver machine in the compressor system, it is useful to provide in the compressor system a variable-speed drive (VSD) system coupled to the driver machine and arranged to vary the rotation speed of the centrifugal compressor or compressors. For example a reliable four-poles AC induction electric motor operating at a frequency of 50 Hz may be combined with a reliable VSD system able to vary the frequency from 0 Hz up to 75 Hz; this result in a rotation speed from 0 rpm to 2250 rpm.

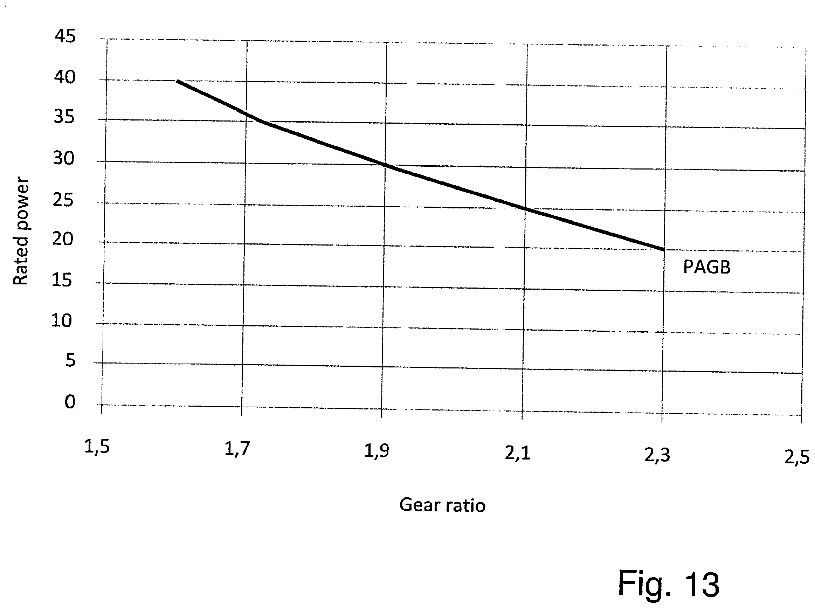

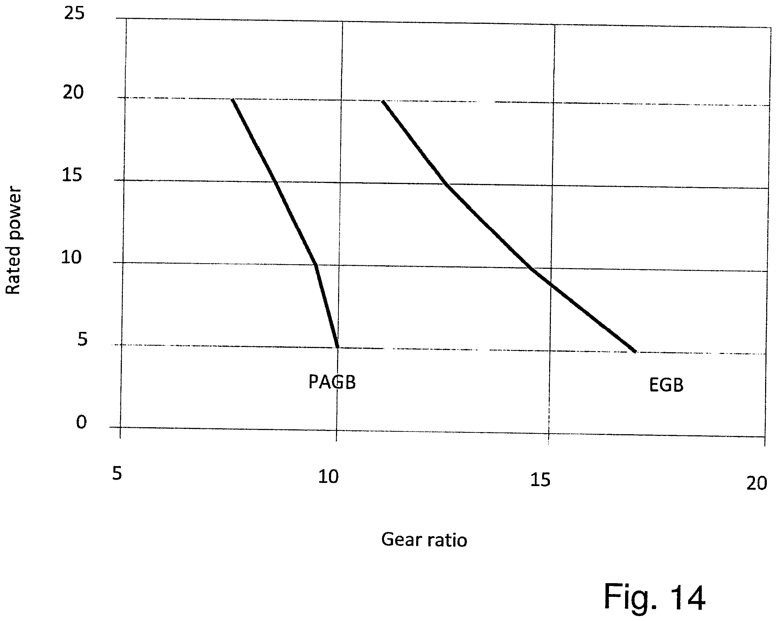

In the graphs of Fig. 13 and Fig. 14, the Rated power is expressed in MWatts and the Gear ratio is expressed as a pure number.

The graph of Fig. 13, labeled PAGB, has been derived by the Inventors and corresponds to a reasonable limit for using parallel-axes gearboxes in combination with gas turbines; this graph assumes a rotation speed of the gas turbine acting as a driver machine of about 6000 rpm; above this limit, parallel-axes gearboxes can not be used and epicyclic gearboxes have to be contemplated.

A similar graph may be provided for steam turbines.

The graphs of Fig. 14, labeled PAGB and EGB, have been derived by the Inventors and correspond to a reasonable limit for using respectively parallel-axes gearboxes and epicyclic gearboxes in combination with electric motors; these graphs assume a rotation speed of the electric motor acting as a driver machine of about 1500 rpm (50 Hz operation); very similar graphs may be provided for a rotation speed of about 1800 rpm (60 Hz operation); the best area of application (according to the current technologies) of the combination of a four-poles AC induction electric motor and an epicyclic gearbox is comprised between these two graphs; it is to be considered that four-poles AC induction electric motors are certified to be used for very high power applications (for example 2-40 MW) even in environments with risks of explosions due to a specific gas mixture being compressed.

It is worth clarifying that, although Fig. 14 refers to use of four-poles motors, the present invention does not exclude the use of two-poles motors.

Additionally, it is worth noting that, although Fig. 14 refers to the compound epicyclic gearboxes (i.e. having a gear ratio greater than about 10 or 11), the present invention does not exclude the use of "simple" (i.e. not compound) epicyclic gearboxes when the required gear ratio is lower (for example lower than 10 or 11).

The compression of gas in the above described embodiments, is carried out, at least partially, by means of a centrifugal compressor driven by a driver machine through an epicyclic gearbox having a gear ratio greater then one.

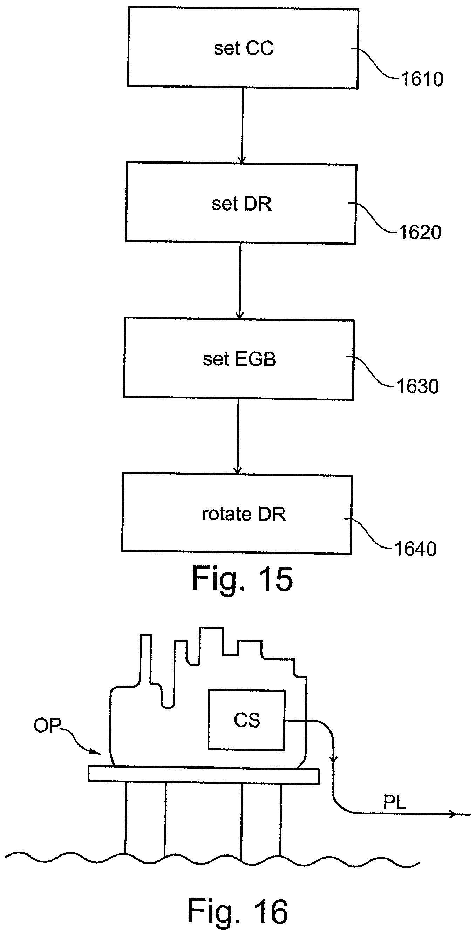

As shown in Fig. 15, and generally known in the art, a centrifugal compressor CC is arranged (step 1610) according to an appropriate design and/or choice, a driver machine DR is arranged (step 1620) according to an appropriate design and/or choice, an epicyclic gearbox EGB is arranged (step 1630) according to an appropriate design and/or choice; by rotating the driver machine DR (step 1640) also the centrifugal compressor CC is rotated by means of the epicyclic gearbox EGB; clearly, the gas is provided to the inlet of the centrifugal compressor CC before starting the driver machine DR.

The epicyclic gearbox is used for reaching a high rotation speed of the compressor; therefore, preferably, the gear ratio of said epicyclic gearbox is in the range from 5 to 20, depending on the application; the epicyclic gearbox is designed accordingly.

Preferably, the centrifugal compressor is operated at a maximum rotation speed in the range from 14000 rpm to 28000 rpm, depending on the application; with present technologies, the upper limit is chosen at about 22000 rpm; the centrifugal compressor is designed accordingly.

A high rotation speed (achieved through epicyclic gearing) allows to use more compact and more efficient centrifugal compressors.

Preferably, the centrifugal compressor is operated at a pressure ratio in the range from 1.5 to 40, depending on the application. Although very high pressure ratios are desirable, the mixture of the gas influence the choice of the pressure ratio: for example, if a natural gas is rich of hydrogen, the lower part of the above mentioned range is preferable due to the risk of explosions.

The centrifugal compressor is operated so to provide an maximum output gas pressure in the range from 30 bar to 600 bar, depending on the application.

The centrifugal compressor is operated so to treat a maximum gas flow in the range from 1500 m3/hr to 100000 m3/hr, depending on the application.

The ranges of parameters just set out for operating the centrifugal compressor influence the technical features of the centrifugal compressor as well as the technical features of the driver machine and the epicyclic gearbox.

Step 1640 provides to rotate the driver machine of the compressor system and consequently any centrifugal compressor of the compressor system connected or coupled thereto.

The rotation speed is often constant during stable operation, i.e. regime. Anyway, it might be advantageous to vary the rotation speed for example during start-up or if different regimes are contemplated; for this purpose a VSD system is advantageously used.

According to specific and advantageous embodiments, there are more than one centrifugal compressors and the method provides to drive by means of the same driver machine two or more centrifugal compressors at different rotation speeds. This is useful for example when driving two cascaded compression stages.

The above described compressor systems and methods are typically applied and used in plants of the "Oil & Gas" industry, i.e. in "upstream" and/or "downstream" plants.

Fig. 16 shows an offshore platform OP comprising a compressor system CS feeding compressed natural gas to a pipeline PL; this is an example of an "upstream" application. Alternatively, the compressor system CS may be used at an offshore platform to produce compressed gas, to be injected into a well.

Very good results have been achieved by combining an electric motor (especially a four-pole electrc motor), an epicyclic gearbox (especially a compound epicyclic gearbox), a further gearbox (epicyclic or not) and two centrifugal compressors, and using this combination as a compressor system such as the one shown in Fig. 16.

An particular example of a "downstream" application may be the compression of ammonia.

At the light of the above, a person skilled in the art understands the advantages of the embodiments just described and the embodiments falling with the appended claims. As far as the centrifugal compressor system is concerned, some advantages are the following :
- reduction in the size
- improvement in efficiency
- reduction in weight
- reduction in footprint

As far as the driver machine of the compressor system is concerned, some advantages are the following :
- possibility to use lower power driver machines
- possibility to use lower speed driver machines
- reduction in weight
- reduction in footprint

As far as the gearbox of the compressor system is concerned, some advantages are the following :
- lower weight
- lower size
- lower footprint
- lower lubrication oil consumption
- higher efficiency (up to 1%)

As far as the baseplate of the compressor system is concerned, some advantages are the following :
- lower size
- lower weight

## Claims

1. A compressor system for natural gas comprising:
- a driver machine (DR) comprising an output rotary member (DO),
- a gearbox (GB, EGB) comprising an input rotary member (GI) and an output rotary member (GO), and having a gear ratio greater than one thus increasing the rotation speed from input to output, and
- a centrifugal compressor (CC) for compressing natural gas, the centrifugal compressor having an input rotary member (CI);
wherein the output rotary member (DO) of said driver machine is coupled to the input rotary member (GI) of said gearbox, and
wherein the output rotary member (GO) of said gearbox is coupled to the input rotary member (GI) of said centrifugal compressor; and
comprising further another centrifugal compressor for compressing natural gas, and wherein said centrifugal compressor (CC) and said another centrifugal compressor are connected in train configuration to the output rotary member of said driver machine (DR);
**characterized by** the centrifugal compressor (CC) having an output rotary member connected to an input rotary member of another gearbox (GB, EGB), the another gearbox (GB, EGB) having an output rotary member connected to an input rotary member of the another centrifugal compressor; and
one of the gearboxes being an epicyclic gearbox (EGB).

2. The compressor system of claim 1, wherein said epicyclic gearbox (EGB) is multi-stage, preferably two-stage, and/or compound type.

3. The compressor system of claim 1 or claim 2, wherein said driver machine (DR) is an electric motor or a gas turbine or a steam turbine.

4. The compressor system of any preceding claim, wherein said epicyclic gearbox (EGB) is mounted on the driver machine, or on foot, or on the driver machine and on foot.

5. A method of compressing natural gas through a compressor system of any preceding claim, wherein said centrifugal compressor (CC, CCC) is driven by the driver machine (DR) through the gearbox (GB, EGB) having a gear ratio greater than one, wherein said driver machine (DR) comprises the output rotary member (DO) and wherein said output rotary member (DO) is used for driving the two centrifugal compressors at different rotation speeds.

6. The method of claim 5, wherein the gear ratio of said epicyclic gearbox (EGB) is in the range from 5 to 20.

7. The method of claim 5 or claim 6, wherein said driver machine (DR) is operated at variable rotation speed.

8. A plant comprising a compressor system for gas of any of claims 1 to 4.

## Patentansprüche

1. Verdichtungssystem für Erdgas, umfassend:
- eine Antriebsmaschine (DR), umfassend ein Ausgangsdrehelement (DO),
- ein Getriebe (GB, EGB), umfassend ein Eingangsdrehelement (GI) und ein Ausgangsdrehelement (GO), das ein Übersetzungsverhältnis größer als eins aufweist und somit die Drehgeschwindigkeit vom Eingang zum Ausgang erhöht, und
- einen Radialverdichter (CC) zum Verdichten von Erdgas, wobei der Radialverdichter ein Eingangsdrehelement (CI) aufweist;
wobei das Ausgangsdrehelement (DO) der Antriebsmaschine mit dem Eingangsdrehelement (GI) des Getriebes gekoppelt ist, und
wobei das Ausgangsdrehelement (GO) des Getriebes mit dem Eingangsdrehelement (GI) des Radialverdichters gekoppelt ist; und
umfassend ferner einen weiteren Radialverdichter zum Verdichten von Erdgas, und wobei der Radialverdichter (CC) und der weitere Radialverdichter in einer Zugkonfiguration mit dem Ausgangsdrehelement der Antriebsmaschine (DR) verbunden sind;
**dadurch gekennzeichnet, dass** der Radialverdichter (CC) ein Ausgangsdrehelement aufweist, das mit einem Eingangsdrehelement eines anderen Getriebes (GB, EGB) verbunden ist, wobei das andere Getriebe (GB, EGB) ein Ausgangsdrehelement aufweist, das mit einem Eingangsdrehelement des anderen Radialverdichters verbunden ist; und
eines der Getriebe ein Planetengetriebe (EGB) ist.

2. Verdichtungssystem nach Anspruch 1, wobei das Planetengetriebe (EGB) mehrstufig, vorzugsweise zweistufig, und/oder vom Typ eines Verbundgetriebes ist.

3. Verdichtungssystem nach Anspruch 1 oder Anspruch 2, wobei die Antriebsmaschine (DR) ein Elektromotor oder eine Gasturbine oder eine Dampfturbine ist.

4. Verdichtungssystem nach einem der vorstehenden Ansprüche, wobei das Planetengetriebe (EGB) an der Antriebsmaschine oder am Fuß oder an der Antriebsmaschine und am Fuß montiert ist.

5. Verfahren zum Verdichten von Erdgas durch ein Verdichtungssystem nach einem der vorstehenden Ansprüche, wobei der Radialverdichter (CC, CCC) durch die Antriebsmaschine (DR) über das Getriebe (GB, EGB) mit einem Übersetzungsverhältnis größer als eins angetrieben wird, wobei die Antriebsmaschine (DR) das Ausgangsdrehelement (DO) umfasst und wobei das Ausgangsdrehelement (DO) zum Antreiben der beiden Radialverdichter mit unterschiedlichen Drehzahlen verwendet wird.

6. Verfahren nach Anspruch 5, wobei das Übersetzungsverhältnis des Planetengetriebes (EGB) im Bereich von 5 bis 20 liegt.

7. Verfahren nach Anspruch 5 oder Anspruch 6, wobei die Antriebsmaschine (DR) mit variabler Drehung betrieben wird.

8. Anlage, umfassend ein Verdichtungssystem für Gas nach einem der Ansprüche 1 bis 4.

## Revendications

1. Système de compresseur pour gaz naturel comprenant :
- une machine d'entraînement (DR) comprenant un élément rotatif de sortie (DO),
- une boîte d'engrenage (GB, EGB) comprenant un élément rotatif d'entrée (GI) et un élément rotatif de sortie (GO), et ayant un rapport d'engrenage supérieur à un augmentant ainsi la vitesse de rotation d'entrée à sortie, et
- un compresseur centrifuge (CC) pour la compression de gaz naturel, le compresseur centrifuge ayant un élément rotatif d'entrée (CI) ;
dans lequel l'élément rotatif de sortie (DO) de ladite machine d'entraînement est couplé à l'élément rotatif d'entrée (GI) de ladite boîte d'engrenage, et
dans lequel l'élément rotatif de sortie (GO) de ladite boîte d'engrenage est couplé à l'élément rotatif d'entrée (GI) dudit compresseur centrifuge ; et
- comprenant en outre un autre compresseur centrifuge pour la compression de gaz naturel, et dans lequel ledit compresseur centrifuge (CC) et ledit autre compresseur centrifuge sont connectés en configuration de train à l'élément rotatif de sortie de ladite machine d'entraînement (DR) ;
**caractérisé par** le compresseur centrifuge (CC) ayant un élément rotatif de sortie connecté à un élément rotatif d'entrée d'une autre boîte d'engrenage (GB, EGB), l'autre boîte d'engrenage (GB, EGB) ayant un élément rotatif de sortie connecté à un élément rotatif d'entrée de l'autre compresseur centrifuge ; et
l'une des boîtes d'engrenage étant une boîte d'engrenage épicycloïdale (EGB).

2. Système de compresseur selon la revendication 1, dans lequel ladite boîte d'engrenage épicycloïdale (EGB) est du type multi-étagé, de préférence bi-étagé, et/ou composé.

3. Système de compresseur selon la revendication 1 ou la revendication 2, dans lequel ladite machine d'entraînement (DR) est un moteur électrique ou une turbine à gaz ou une turbine à vapeur.

4. Système de compresseur selon l'une quelconque revendication précédente, dans lequel ladite boîte d'engrenage épicycloïdale (EGB) est montée sur la machine d'entraînement, ou sur pied, ou sur la machine d'entraînement et sur pied.

5. Procédé de compression de gaz naturel à travers un système de compresseur selon l'une quelconque revendication précédente, dans lequel ledit compresseur centrifuge (CC, CCC) est entraîné par la machine d'entraînement (DR) à travers la boîte d'engrenage (GB, EGB) ayant un rapport d'engrenage supérieur à un, dans lequel ladite machine d'entraînement (DR) comprend l'élément rotatif de sortie (DO) et dans lequel ledit élément rotatif de sortie (DO) est utilisé pour entraîner les deux compresseurs centrifuges à différentes vitesses de rotation.

6. Procédé selon la revendication 5, dans lequel le rapport d'engrenage de ladite boîte d'engrenage épicycloïdale (EGB) est dans la plage allant de 5 à 20.

7. Procédé selon la revendication 5 ou la revendication 6, dans lequel ladite machine d'entraînement (DR) est mise en fonctionnement à une vitesse de rotation variable.

8. Installation comprenant un système de compresseur pour gaz selon l'une quelconque des revendications 1 à 4.
